# EUROPÄISCHE PATENTSCHRIFT

(11) **EP 2 435 492 B1**
(45) Veröffentlichungstag und Bekanntmachung des Hinweises auf die Patenterteilung: **02.01.2019**
(21) Anmeldenummer: 10724036.8
(22) Anmeldetag: 27.05.2010
(51) Int. Cl.: C08G 18/28, C09J 175/08, C08G 18/71, C08G 18/48, C08G 18/10, C08G 18/75

(54) **FEUCHTIGKEITSHÄRTENDE ZUSAMMENSETZUNG MIT VERBESSERTER ANFANGSFESTIGKEIT**
MOISTURE-CURABLE COMPOSITION SHOWING IMPROVED GREEN STRENGTH
COMPOSITION DURCISSABLE À L'HUMIDITÉ AVEC UNE RÉSISTANCE INITIALE ÉLEVÉE

(30) Priorität: 27.05.2009 EP 09161265
(43) Veröffentlichungstag der Anmeldung: 04.04.2012
(73) Patentinhaber: Sika Technology AG, 6340 Baar (CH)
(72) Erfinder: OERTLI, Marcel, CH-8049 Zürich (CH); RUTZ, Daniele, CH-8049 Zürich (CH); JUCKER, Barbara, CH-8059 Zürich (CH)
(74) Vertreter: Sika Patent Attorneys
(86) Internationale Anmeldenummer: PCT/EP2010/057296
(87) Internationale Veröffentlichungsnummer: WO 2010/136512

(56) Entgegenhaltungen:
- EP-A- 0 096 250
- EP-A- 0 202 491
- EP-A- 0 354 472
- US-A- 4 408 021
- US-A- 6 048 579

## Beschreibung

### Technisches Gebiet

Das Gebiet betrifft feuchtigkeitshärtende Zusammensetzungen auf Basis silanfunktioneller Polymere, welche sich als Klebstoffe, Dichtstoffe oder Beschichtungen eignen und verbesserte Anfangsfestigkeiten aufweisen.

### Stand der Technik

Für viele Anwendungen ist es wünschenswert, feuchtigkeitshärtende Zusammensetzungen als Klebstoffe, Dichtstoffe oder Beschichtungen einzusetzen, welche eine hohe Anfangsfestigkeit aufweisen. Beispielsweise weisen Klebstoffe mit einer niedrigen Anfangsfestigkeit den Nachteil auf, dass die mittels Klebstoff gefügten Teile, bis zum Aufbau einer gewissen Festigkeit fixiert werden müssen, damit sie in der gewünschten Position verbleiben.

Zur Bereitstellung von feuchtigkeitshärtenden Zusammensetzungen mit hohen Anfangsfestigkeiten sind verschiedene Ansätze bekannt. Weit verbreitet ist dabei der Einsatz zweikomponentiger Zusammensetzungen oder von reaktiven Warm- oder Heissschmelzzusammensetzungen, insbesondere von Warm- oder Heissschmelzklebstoffen, so genannten Warm- oder Hot-Melts. Bekannt ist auch eine Kombination beider Ansätze.

Warm- oder Heissschmelzklebstoffe weisen dabei den Nachteil auf, dass ihre Viskosität unmittelbar nach der Applikation sehr stark ansteigt. Dadurch sind beispielsweise Korrekturen in der Ausrichtung von zwei zu verklebenden Substraten nach dem Fügen nur erschwert möglich. Weiterhin sind diese Klebstoffe in der Regel für viele Anwendungen zu wenig elastisch um thermische Ausdehnungen zu kompensieren.

Neben reinen Warm- oder Heissschmelzklebstoffen, in welchen die feuchtigkeitsreaktiven Bestandteile vollständig oder zumindest grösstenteils als bei Raumtemperatur feste Bestandteile vorliegen, sind auch Warm- oder Heissschmelzklebstoffe bekannt, bei welchen nur ein Teil der feuchtigkeitsreaktiven Bestandteile bei Raumtemperatur fest ist. Diese enthalten im Allgemeinen neben einem flüssigen, reaktiven Bestandteil, eine ebenfalls reaktive oder nichtreaktive Schmelzkomponente. Um Zusammensetzungen zu erhalten, welche möglichst gute mechanische Eigenschaften aufweisen, werden reaktive Schmelzkomponenten bevorzugt, wobei das Spektrum an solchen sehr breit ist. Für feuchtigkeitshärtende Zusammensetzungen auf Basis von silanfunktionellen Polymeren werden als reaktive Schmelzkomponenten Umsetzungsprodukte von beliebigen Polyolen mit Polyisocyanaten, welche anschliessend mit Amino- oder Mercaptosilanen umgesetzt werden, eingesetzt. Beispielsweise ist eine derartige Zusammensetzung beschrieben in WO 2004/005420 A1.

Die EP 0202491 beschreibt Zusammensetzungen auf Basis silanfunktioneller Polymere, welche sich als Schmelzkleber eignen. Diese umfassen ein bei Raumtemperatur festes, silanfunktionelles Polyesterpolymer sowie ein bei Raumtemperatur flüssiges, silanfunktionelles Polyesterpolymer.

Die EP 0354472 beschreibt ebenfalls Zusammensetzungen auf Basis silanfunktioneller Polymere, welche sich als Schmelzkleber eignen. Diese sind erhältlich durch Umsetzung von NCO-terminierten Alkoxysilanverbindungen mit linearen OH- und/oder NH-terminierten difunktionellen Polymeren.

Sämtliche bekannte feuchtigkeitshärtende Zusammensetzungen bieten jedoch Verbesserungspotential in Bezug auf die erzielte Anfangsfestigkeit, Haftungseigenschaften und bezüglich der mechanischen Eigenschaften der ausgehärteten Zusammensetzungen.

### Darstellung der Erfindung

Aufgabe der vorliegenden Erfindung ist es daher, feuchtigkeitshärtende Zusammensetzungen zur Verfügung zu stellen, welche sich als Klebstoffe, Dichtstoffe oder Beschichtungen eignen und verbesserte Anfangsfestigkeiten aufweisen.

Überraschenderweise wurde nun gefunden, dass Zusammensetzungen gemäss Anspruch 1 diese Aufgabe lösen.

Für den Fachmann war es in keiner Weise naheliegend, ein feuchtigkeitsreaktives silanfunktionelles Polymer, welches bei Raumtemperatur flüssig ist mit einem spezifischen silanfunktionellen Polyester zu kombinieren, um zu einer feuchtigkeitshärtenden Zusammensetzung mit einer verbesserten Anfangsfestigkeit zu gelangen.

Ein weiterer Vorteil der erfindungsgemässen Zusammensetzung ist weiterhin der signifikant erhöhte Elastizitätsmodul bei kleinen Dehnungen, eine Eigenschaft, die bei Zusammensetzungen auf Basis silanfunktioneller Polymere in der Regel deutlich unter bekannten Zusammensetzungen, beispielsweise auf Basis von Polyurethanen, liegt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist in einem ersten Aspekt eine Zusammensetzung umfassend
i) mindestens ein feuchtigkeitsreaktives silanfunktionelles Polymer, welches bei Raumtemperatur flüssig ist, wobei das silanfunktionelle Polymer:
   - ein silanfunktionelles Polyurethanpolymer **STP1** ist, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist und erhältlich ist durch die Umsetzung aus mindestens einem Polyisocyanat mit mindestens einem Polyoxyalkylenpolyol,
      oder
   - ein silanfunktionelles Polyurethanpolymer **STP2** ist, erhältlich durch die Umsetzung eines Isocyanatosilans **IS** der Formel (II) 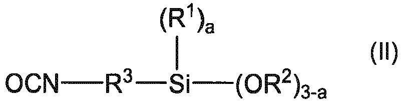 mit einem Polymer, welches Hydroxylgruppen, Mercaptogruppen und/oder Aminogruppen aufweist, wobei ein Hydroxylgruppen aufweisendes Polymer
      - ein hochmolekulares Polyoxyalkylenpolyol mit einem Ungesättigtheitsgrad tiefer als 0.02 mEq/g und mit einem Molekulargewicht im Bereich von 4000 bis 30'000 g/mol ist, oder
      - ein Hydroxylgruppen aufweisendes Polyurethanpolymer erhältlich durch die Umsetzung von mindestens einem Polyisocyanat mit mindestens einem Polyoxyalkylenpolyol,
         oder
   - ein silanfunktionelles Polymer **STP3** ist, welches erhältlich ist durch eine Hydrosilylierungsreaktion von Polymeren mit endständigen Doppelbindungen und diese Polymere Polyoxyalkylenpolyole sind; sowie
ii) mindestens einen silanfunktionellen Polyester der Formel (I).

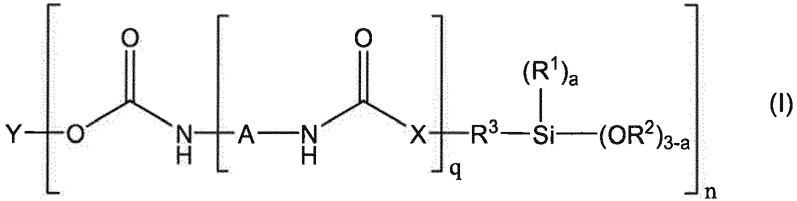

Dabei steht Y für einen n-wertigen Rest eines, bei Raumtemperatur festen, Hydroxylgruppen terminierten Polyesters **P** nach Entfernung von n Hydroxylgruppen.

Der Rest R¹ steht für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist. Insbesondere steht R¹ für eine Methyl-, Ethyl- oder Isopropylgruppe.

Der Rest R² steht für einen Acylrest oder für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist. Vorzugsweise steht der Rest R² für eine Acyl- oder Alkylgruppe mit 1 bis 5 C-Atomen, insbesondere für eine Methyl- oder für eine Ethyl- oder für eine Isopropylgruppe.

Der Rest R³ steht für einen linearen oder verzweigten, zweiwertigen Kohlenwasserstoffrest mit 1 bis 12 C-Atomen, welcher gegebenenfalls cyclische und/oder aromatischen Anteile, und gegebenenfalls ein oder mehrere Heteroatome aufweist. Vorzugsweise steht der Rest R³ für einen Alkylenrest mit 1 bis 3 C-Atomen, insbesondere mit 3 C-Atomen.

Weiterhin steht der Index a für einen Wert von 0, 1 oder 2, insbesondere für 0 oder 1.

Der Index n steht für einen Wert von 1 bis 3, insbesondere für 2.

Der Rest A steht für einen zweiwertigen Rest eines Diisocyanats nach Entfernung der beiden Isocyanatgruppen.

Der Index q steht für einen Wert von 0 oder 1, insbesondere für 0.

Der Rest X steht für S oder für NR⁵, wobei der Rest R⁵ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (II) steht.

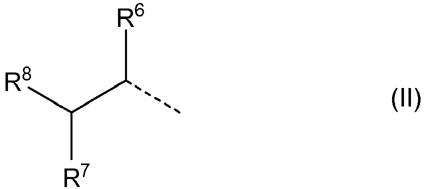

Die Reste R⁶ und R⁷ stehen dabei unabhängig voneinander für ein Wasserstoffatom oder für einen Rest aus der Gruppe bestehend aus -R¹¹, -COOR¹¹ und -CN.

Weiterhin steht der Rest R⁸ für ein Wasserstoffatom oder für einen Rest aus der Gruppe bestehend aus -CH₂-COOR¹¹, -COOR¹¹, CONHR¹¹, -CON(R¹¹)₂, -CN, -NO₂, -PO(OR¹¹)₂, -SO₂R¹¹ und -SO₂OR¹¹.

Der Rest R¹¹ steht für einen Kohlenwasserstoffrest mit 1 bis 20 C-Atomen, welcher gegebenenfalls ein oder mehrere Heteroatome aufweist.

Innerhalb einer Silangruppe im Polyester der Formel (I) stehen R¹ und R² jeweils unabhängig voneinander für die beschriebenen Reste. So sind beispielsweise auch Polyester der Formel (I) mit Endgruppen möglich, welche Ethoxydimethoxysilan-Endgruppen (R² = Methyl, R² = Methyl, R² = Ethyl) sind.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument stets das Molekulargewichtsmittel Mₙ (Zahlenmittel).

Als "fest" werden im vorliegenden Dokument Substanzen verstanden, welche ohne äussere Einwirkung ihre Form nicht verändern oder sich nur schwer verformen lassen, insbesondere sind sie jedoch nicht fliessfähig. Als "flüssig" werden entsprechend Substanzen verstanden, welche sich verformen lassen und fliessfähig sind, was auch hochviskose und pastöse Substanzen einschliesst.

Als "Raumtemperatur" wird im vorliegenden Dokument eine Temperatur von 23 °C bezeichnet.

Als Hydroxylgruppen terminierter Polyester **P** sind insbesondere Polyester geeignet, welche nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Bevorzugt handelt es sich beim Hydroxylgruppen terminierten Polyester **P** um einen kristallinen Polyester.

Weiterhin bevorzugt weist der Polyester **P** ein mittleres Molekulargewicht Mₙ von > 2500 g/mol bis 7000 g/mol auf. Meist bevorzugt liegt das mittlere Molekulargewicht Mₙ des Polyesters **P** im Bereich von 3500 g/mol bis 6000 g/mol.

Im bevorzugten Molekulargewichtsbereich weisen die Polyester **P,** gegenüber kettenverlängerten Polyestern oder Polyestern mit einer inhomogenen Molekulargewichtsverteilung, verbesserte Kristallisationseigenschaften auf, welche dazu führen, dass eine erfindungsgemässe Zusammensetzung bei ihrer Applikation, eine verbesserte Anfangsfestigkeit aufweist.

Handelt es sich beim Polyester **P** um einen kristallinen Polyester, liegt der Kristallisationspunkt des Polyesters **P** bevorzugt weniger als 30 °C unterhalb des Schmelzpunktes des Polyesters **P.**

Zusammensetzungen, enthaltend eine erfindungsgemässe reaktive Schmelzkomponente auf Basis eines Polyesters **P,** bei welchen der Kristallisationspunkt des Polyesters **P** weniger als 30 °C unterhalb des Schmelzpunktes des Polyesters **P** liegt, sind besonders bevorzugt, weil dadurch die Zeitspanne von der Applikation der Zusammensetzung mit aufgeschmolzener Schmelzkomponente, bis zum Erreichen einer genügenden, durch Kristallisation der Schmelzkomponente hervorgerufenen, Anfangsfestigkeit verkürzt werden kann. So müssen beispielsweise Substrate, welche mit einem Klebstoff auf Basis von Zusammensetzungen, enthaltend eine erfindungsgemässe reaktive Schmelzkomponente, miteinander verklebt werden, bis zum Erreichen einer genügenden Anfangsfestigkeit des Klebstoffs, nicht oder nur für kurze Zeit fixiert werden, damit sie sich nicht gegeneinander verschieben. Dies ist insbesondere vorteilhaft bei vertikalen Verklebungen, beispielsweise bei der Verklebung einer Windschutzscheibe eines Fahrzeugs oder eines Transportmittels.

Erfindungsgemässe silanfunktionelle Polyester der Formel (I), bei welchen der Index q für einen Wert von 0 steht und welche somit bevorzugt sind, sind typischerweise erhältlich durch die Umsetzung eines Isocyanatosilans **IS** der Formel (II) mit einem vorhergehend beschriebenen Polyester **P.**

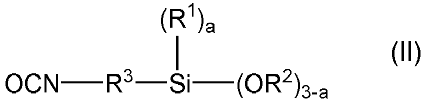

R¹, R², R³ und a wurden bereits vorhergehend beschrieben.

Diese Umsetzung erfolgt im stöchiometrischen Verhältnis der Isocyanatgruppen zu den Hydroxylgruppen des Polyesters **P** von 1:1, oder mit leichtem Überschuss an Hydroxylgruppen, beispielsweise bei Temperaturen von 20 °C bis 100 °C, gegebenenfalls unter Mitverwendung von Katalysatoren.

Beispiele für geeignete Isocyanatosilane **IS** der Formel (II) sind 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Erfindungsgemässe silanfunktionelle Polyester der Formel (I), bei welchen der Index q für einen Wert von 1 steht, sind typischerweise erhältlich durch die Umsetzung eines vorhergehend beschriebenen Polyesters **P** mit einem stöchiometrischen Überschuss an Diisocyanat der Formel OCN-A-NCO und anschliessender Umsetzung des so gebildeten Reaktionsprodukts mit einem Amino- oder einem Mercaptosilan der Formel (III), in einer Menge, dass keine Isocyanatgruppen mehr übrig bleiben.

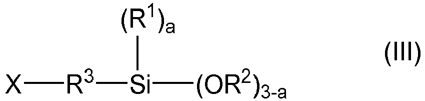

X, R¹, R², R³ und a sind bereits vorhergehend beschrieben.

Insbesondere wird das erwähnte Reaktionsprodukt mit einem Aminosilan der Formel (IV) umgesetzt, wobei die Reste R¹, R², R³, R⁵ und a bereits vorhergehend beschreiben sind.

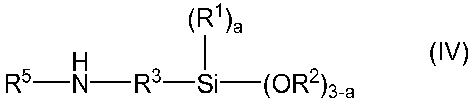

Als Diisocyanate der Formel OCN-A-NCO eignen sich handelsübliche Diisocyanate.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-lsocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Für die Herstellung des silanfunktionellen Polyesters der Formel (I) bevorzugte Diisocyanate der Formel OCN-A-NCO sind IPDI, TDI und MDI.

Beispiele für geeignete Aminosilane der Formel (IV) sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane besonders geeignet sind sekundäre Aminosilane, insbesondere Aminosilane, bei denen R⁵ in Formel (IV) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Der Anteil an silanfunktionellem Polyester der Formel (I) beträgt insbesondere 0.5 bis 10 Gew.-%, bevorzugt 1 bis 8 Gew.-%, der gesamten Zusammensetzung.

Beim feuchtigkeitsreaktiven silanfunktionellen Polymer, welches bei Raumtemperatur flüssig ist, handelt es sich insbesondere um ein silanfunktionelles Polymer **STP,** welches Endgruppen der Formel (V) aufweist.

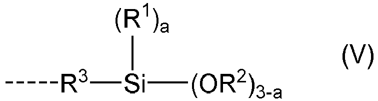

R¹, R², R³ und a wurden bereits vorhergehend beschrieben.

In einer ersten Ausführungsform ist das feuchtigkeitsreaktive silanfunktionelle Polymer **STP** ein silanfunktionelles Polyurethanpolymer **STP1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **STP1** gänzlich frei von Isocyanatgruppen ist.

Das Silan, welches mindestens eine gegenüber Isocyanatgruppen reaktive Gruppe aufweist, ist beispielsweise ein Mercaptosilan oder ein Aminosilan der Formel (III), insbesondere ein Aminosilan der Formel (IV), wie sie jeweils vorhergehend beschrieben sind.

Als Isocyanatgruppen aufweisendes Polyurethanpolymer zur Herstellung eines silanfunktionellen Polyurethanpolymers **STP1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktiven Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2:1 erhalten werden.

Geeignete Polyole sind insbesondere Polyetherpolyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, wie sie vorhergehend als Polyester **P** beschrieben sind, wobei das Molekulargewicht dieser Polyesterpolyole, welche zur Herstellung des silanfunktionellen Polymers **P** verwendet werden, so gewählt ist, dass die Polyesterpolyole bei Raumtemperatur flüssig sind.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Als Polyisocyanate für die Herstellung des Polyurethanpolymers können handelsübliche aliphatische, cycloaliphatische oder aromatische Polyisocyanate, insbesondere Diisocyanate der Formel OCN-A-NCO, wie sie vorhergehend beschreiben sind, verwendet werden.

Beispielsweise sind geeignete silanfunktionelle Polymere **STP1** kommerziell erhältlich unter dem Handelsnamen Polymer ST50 von der Firma Hanse Chemie AG, Deutschland, sowie unter dem Handelsnamen Desmoseal® von der Firma Bayer MaterialScience AG, Deutschland.

Das silanfunktionelle Polymer **STP** ist in einer zweiten Ausführungsform ein silanfunktionelles Polyurethanpolymer **STP2,** erhältlich durch die Umsetzung eines Isocyanatosilans **IS** der Formel (II), wie es vorhergehend beschrieben ist, mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4000 bis 30'000 g/mol, insbesondere solche mit einem Molekulargewicht im Bereich von 8000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS**. Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **STP1** verwendet wird.

Beispielsweise sind geeignete silanfunktionelle Polymere **STP2** kommerziell erhältlich unter den Handelsnamen SPUR⁺® 1010LM, 1015LM und 1050MM von der Firma Momentive Performance Materials Inc., USA, sowie unter den Handelsnamen Geniosil® STP-E15, STP-10 und STP-E35 von der Firma Wacker Chemie AG, Deutschland.

In einer dritten Ausführungsform ist das silanfunktionelle Polymer **STP** ein silanfunktionelles Polymer **STP3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.

Beispielsweise sind geeignete silanfunktionelle Polymere **STP3** kommerziell erhältlich unter dem Handelsnamen MS-Polymer®, insbesondere als MS-Polymer® S203H, S303H, S227, S810, MA903 und S943, Silyl® SAX220, SAX350, SAX400 und SAX725, Silyl® SAT350 und SAT400, sowie XMAP® SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.

Üblicherweise ist das silanfunktionelle Polymer **STP** in einer Menge von 10 bis 80 Gew.-%, bevorzugt in einer Menge von 20 bis 70 Gew.-%, bezogen auf die gesamte Zusammensetzung, vorhanden.

Meist bevorzugt ist das feuchtigkeitsreaktive silanfunktionelle Polymer, welches bei Raumtemperatur flüssig ist, ein silanfunktionelles Polyurethanpolymer, insbesondere ein silanfunktionelles Polyurethanpolymer des Typs **STP1** oder ein silanfunktionelles Polymer des Typs **STP3.**

Ebenfalls bevorzugt weist das feuchtigkeitsreaktive silanfunktionelle Polymer eine Glasübergangstemperatur T_{G} von ≤ -50 °C, insbesondere von - 50 °C bis -70 °C. Der Vorteil dieses Glasübergangstemperaturbereichs liegt insbesondere in den verbesserten Eigenschaften der Zusammensetzung im Tieftemperaturbereich.

Vorzugsweise enthält die Zusammensetzung weiterhin mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 20 bis 60 Gew.-%, bevorzugt 30 bis 60 Gew.-%, bezogen auf die gesamte Zusammensetzung.

Weiterhin enthält die erfindungsgemässe Zusammensetzung insbesondere mindestens einen Katalysator für die Vernetzung der silanfunktionellen Polymere mittels Feuchtigkeit. Derartige Katalysatoren sind insbesondere Metallkatalysatoren in Form von Organozinnverbindungen wie Dibutylzinndilaurat und Dibutylzinndiacetylacetonat, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

In einer meist bevorzugten Ausführungsform der Erfindung handelt es bei der erfindungsgemässen Zusammensetzung um einen feuchtigkeitshärtenden Warm- oder Heissschmelzklebstoff.

Dabei werden die in der Zusammensetzung enthaltenen, bei Raumtemperatur festen silanfunktionellen Polyester der Formel (I) durch Erwärmen der Zusammensetzung aufgeschmolzen. Nach der Applikation der Zusammensetzung im erwärmten Zustand verfestigt sich diese einerseits beim Abkühlen durch Kristallisation der Schmelzkomponente und vernetzt andererseits über eine Reaktion mit Wasser. Das Wasser kann dabei entweder aus der Luft stammen (Luftfeuchtigkeit), oder kann der Zusammensetzung, beispielsweise in Form einer Wasser enthaltenden Komponente, zugesetzt werden.

Warmschmelzklebstoffe werden üblicherweise bei Temperaturen von etwa 40 °C bis 80 °C appliziert. Die Applikationstemperatur von Heissschmelzklebstoffen liegt üblicherweise über etwa 80 °C. Dem Fachmann ist jedoch selbstverständlich bekannt, dass diese Bereiche sich überlappen und es keine scharfe Grenze zwischen Warm- und Heissschmelzklebstoffen gibt.

Als Warm- oder Heissschmelzklebstoffe werden hierbei nicht nur Klebstoffe verstanden, welche bei Raumtemperatur vollständig fest sind, sondern auch solche, welche bei Raumtemperatur flüssig sind, jedoch eine bei Raumtemperatur feste Schmelzkomponente enthalten.

Ein derartiger Klebstoff hat gegenüber einem reinen reaktiven Warm- oder Heissschmelzklebstoff, in welchem die gesamte reaktive Polymerkomponente als Schmelzkomponente eingesetzt wird, den Vorteil, dass er auch nach der Applikation noch eine gewisse Verformbarkeit aufweist, wodurch einfache Korrekturen bei grossflächigen Verklebungen noch möglich sind. Gegenüber feuchtigkeitshärtenden Klebstoffen, welche keine Schmelzkomponente aufweisen bietet ein derartiger Klebstoff der Vorteil, dass er eine deutlich verbesserte Anfangsfestigkeit aufweist.

Die Verwendung der erfindungsgemässen Zusammensetzung als Warm- oder Heissschmelzklebstoff hat den Vorteil, dass die Abkühlung der warm oder heiss applizierten Zusammensetzung auf Umgebungstemperatur zu einer sehr vorteilhaften Erhöhung der Anfangsfestigkeit der Zusammensetzung führt.

In einer weiteren Ausführungsform der Erfindung handelt es bei der erfindungsgemässen Zusammensetzung um eine zweikomponentige Zusammensetzung bestehend aus einer Komponente **A** umfassend die vorhergehend beschriebene Zusammensetzung und einer Komponente **B** umfassend Wasser.

Insbesondere ist die Komponente **A** so beschaffen, dass sie für sich alleine mittels Luftfeuchtigkeit vollständig aushärten kann. Eine derartige ausgehärtete Zusammensetzung liefert vergleichbare Endfestigkeitswerte wie die Mischung der Komponenten **A** und **B** nach der Aushärtung.

Bei der Komponente **B** handelt es sich insbesondere um eine wasserhaltige Paste, in welcher das enthaltene Wasser durch mindestens ein Trägermaterial, welches typischerweise ausgewählt ist aus der Gruppe bestehend aus einem Weichmacher, einem Verdickungsmittel und einem Füllstoff, verdickt wird.

Der Wassergehalt in der Komponente **B** kann je nach Ausführungsform der Komponente **A** variiert werden. Dem Fachmann ist dabei selbstverständlich klar, dass die Menge der eingesetzten Komponente **B,** abhängig von der darin enthaltenen Wassermenge ist. Enthält also beispielsweise die Komponente **B** einen hohen Wasseranteil von > 50 Gew.-% so wird die Komponente **B** üblicherweise in einer Menge von 1 bis 10 Gew.-% bezogen auf die Menge der Komponente **A** eingesetzt. Enthält die Komponente **B** hingegen beispielsweise nur etwa 5 Gew.-% Wasser, kann die Komponente **B** auch in einer Menge von etwa 50 Gew.-% bezogen auf die Menge der Komponente **A** eingesetzt werden.

Vorzugsweise liegt der Wasseranteil an der gesamten zweikomponentigen Zusammensetzung in dem Bereich, dass mit dem vorhandenen Wasser 50 bis 100 % aller reaktiven Gruppen in der Zusammensetzung umgesetzt werden können.

Insbesondere wird die beschriebene zweikomponentige Zusammensetzung so eingesetzt, dass das Gewichtsverhältnis der Komponente **A** zu Komponente **B** ≥ 1:1, insbesondere von 3:1 bis 70:1, bevorzugt von 10:1 bis 20:1, beträgt.

Im Fall einer zweikomponentigen, feuchtigkeitshärtenden Zusammensetzung werden die Komponenten **A** und **B** typischerweise in separaten Verpackungen oder in einer Verpackung aufbewahrt, welche zwei von einander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1und in U S 2003/0051610 A1, deren gesamte Offenbarung hiermit durch Bezugnahme eingeschlossen wird.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Die Verwendung der erfindungsgemässen Zusammensetzung als zweikomponentige Zusammensetzung hat den Vorteil, dass die chemische Vernetzung der Silangruppen in der Zusammensetzung durch direktes Einmischen der Wasser enthaltenden Komponente **B** schneller abläuft und somit eine schnellere Festigkeit aufgebaut wird und die Zusammensetzung schneller durchhärtet. Ein weiterer Vorteil ist, dass die Aushärtung unabhängig von der Luftfeuchtigkeit der Umgebung erfolgen kann.

In einer weiteren Ausführungsform der Erfindung handelt es bei der erfindungsgemässen Zusammensetzung um einen zweikomponentigen Warm- oder Heissschmelzklebstoff. Dabei wird die Komponente **A,** welche den bei Raumtemperatur festen silanfunktionellen Polyester der Formel (I) enthält, erwärmt und im aufgeschmolzenen Zustand unmittelbar vor der Applikation mit der Komponente **B** vermischt. Die Vermischung der Komponenten **A** und **B** erfolgt wiederum typischerweise über einen Statikmischer.

Für die Verwendung der erfindungsgemässen Zusammensetzung als zweikomponentigen Warm- oder Heissschmelzklebstoff wird die Komponente **B** vorzugsweise bei Raumtemperatur eingesetzt. Wegen des geringen Anteils der Komponente **B** an der gesamten Zusammensetzung, beeinträchtigt der Temperaturunterschied der beiden Komponenten die Offenzeit der Zusammensetzung nur geringfügig. Vielmehr wird die Offenzeit der Zusammensetzung durch die Abkühlung der warm oder heiss applizierten Komponente **A** verkürzt.

Die Verwendung eines zweikomponentigen Warm- oder Heissschmelzklebstoffs kombiniert die Vorteile einer zweikomponentigen Zusammensetzung, nämlich die schnelle Vernetzung und Durchhärtung der Zusammensetzung unabhängig von der Luftfeuchtigkeit, mit den Vorteilen eines Warm- oder Heissschmelzklebstoffs, welcher insbesondere in der hohen Anfangsfestigkeit liegt.

Weiterhin umfasst die vorliegende Erfindung die Verwendung einer vorhergehend beschriebenen Zusammensetzung als feuchtigkeitshärtender Klebstoff, Dichtstoff oder Beschichtung. Insbesondere eignet sich die erfindungsgemässe Zusammensetzung als feuchtigkeitshärtender Klebstoff für die Fahrzeugverglasung.

In einem weiteren, bevorzugten Aspekt betrifft die Erfindung die Verwendung einer vorhergehend beschriebenen Zusammensetzung als feuchtigkeitshärtender Warm- oder Heissschmelzklebstoff.

Weiterhin betrifft die Erfindung die Verwendung der zweikomponentigen Zusammensetzung, wie sie vorhergehend beschreiben ist, als feuchtigkeitshärtender Warm- oder Heissschmelzklebstoff.

Die erfindungsgemässe Zusammensetzung wird insbesondere verwendet in einem Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2;**
ii') Aushärtung der Zusammensetzung mittels Wasser, insbesondere in der Form von Luftfeuchtigkeit;
wobei die Substrate **S1** und **S2** gleich oder verschieden voneinander sind.

Handelt es sich bei der erfindungsgemässen Zusammensetzung um einen Warm- oder Heissschmelzklebstoff, geht dem Schritt i) bzw. i') der Applikation der Zusammensetzung ein Schritt des Erwärmens des Klebstoffs voraus, bei welchem der erfindungsgemässe Polyester der Formel (I) als Schmelzkomponente aufgeschmolzen wird.

Handelt es sich bei der erfindungsgemässen Zusammensetzung um eine zweikomponentige Zusammensetzung, geht dem Schritt i) bzw. i') der Applikation der Zusammensetzung ein Schritt des Mischens der beiden Komponenten **A** und **B** voraus.

Handelt es sich bei der erfindungsgemässen Zusammensetzung um einen zweikomponentigen Warm- oder Heissschmelzklebstoff, gehen dem Schritt i) bzw. i') der Applikation der Zusammensetzung ein Schritt des Erwärmens des Klebstoffs, insbesondere der Komponente **A,** und des anschliessenden Mischens der beiden Komponenten **A** und **B** voraus.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung wird typischerweise mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung eine ausgehärtete Zusammensetzung, welche durch die Reaktion einer vorhergehend beschriebenen Zusammensetzung mit Wasser, insbesondere in Form von Luftfeuchtigkeit erhältlich ist.

Bei den Artikeln, welche mit einer erfindungsgemässen Zusammensetzung verklebt, abgedichtet oder beschichtet werden, handelt es sich insbesondere um ein industriell gefertigtes Gut oder ein Konsumgut, insbesondere ein Fenster, eine Haushaltsmaschine, oder ein Transportmittel, insbesondere ein Fahrzeug, oder ein Anbauteil eines Fahrzeugs.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit,** die **Bruchdehnung,** und der **Elastizitätsmodul** (E-Modul) bei 0 bis 5 % Dehnung wurden nach DIN EN 53504 (Zuggeschwindigkeit: 200 mm/min) an während 7 Tagen bei 23 °C und 50 % relativer Luftfeuchtigkeit ausgehärteten Filmen mit einer Schichtdicke von 2 mm bestimmt.

Die **Shore A-Härte** wurde bestimmt nach DIN 53505, an während 7 Tagen bei 23 °C und 50 % relativer Luftfeuchtigkeit ausgehärteten Probekörpern mit einer Schichtdicke von 6 mm.

Die **Anfangsfestigkeit** der Zusammensetzungen wurde über das Abrutschverhalten des Klebstoffs unter statischer Belastung bestimmt. Dabei wurde eine dreiecksförmige Klebstoffraupe (Breite: 10 mm; Höhe: 12 mm) bei einer Temperatur von 70 °C horizontal an einer vertikal positionierten Glasscheibe appliziert, nach 30 Sekunden mit einem Glasprüfkörper (100 x 40 x 6 mm) einer Masse von 120 g auf der gesamten Breite von 40 mm der grössten Fläche des Glasprüfkörpers (entspricht 30 g/cm) auf 5 mm verpresst und für 30 Sekunden fixiert. Danach wurde die Fixierung gelöst und es wurde die Abrutschdistanz ("Slip down") des Glasprüfkörpers nach 2 Minuten gemessen. Zusammensetzungen mit einer Abrutschdistanz von 0.5 mm oder mehr weisen eine mangelhafte Anfangsfestigkeit auf.

Der **Schubmodul** wurde bestimmt nach DIN 54451, wobei zwei Aluminium-Probekörper (70 x 25 x 5 mm), welche mit Sika® Primer-204 N (erhältlich von Sika Schweiz AG) vorbehandelt wurden, auf einer Fläche von 10 x 25 mm mit einer Klebstoffschichtdicke von 1.75 mm verklebt und 7 Tage bei 23 °C und 50% relativer Luftfeuchtigkeit ausgehärtet wurden. Anschliessend wurden die Probekörper mit einer Geschwindigkeit von 10 mm/min auseinander gezogen. Der Schubmodul wird bei 10% Gleitung gemessen.

### Herstellung der Schmelzkomponenten

***SKomp.1:*** 3600 g Dynacoll® 7381 (Evonik Degussa GmbH, Deutschland, kristalliner Polyester, Mₙ = 3500 g/mol, OH-Zahl 29.6) und 400 g Diisodecylphtalat (DIDP, Palatinol® Z, BASF SE, Deutschland) wurden während 1 Stunde bei 120 °C im Vakuum gerührt, um vorhandenes Wasser zu entfernen. Die Mischung wurde dann auf 90 °C abgekühlt und das Vakuum wurde mit Stickstoff gebrochen. Unter Stickstoffatmosphäre wurden 390.66 g 3-Isocyanatopropyltrimethoxysilan (Geniosil® GF-40, Wacker Chemie AG, Deutschland) und 5.28 g Di-n-butyl-zinndilaurat (Metatin® K 712, Acima AG, Schweiz) eingemischt und bei 90 °C weitergerührt, bis keine freien Isocyanatgruppen mehr titrimetrisch nachgewiesen werden konnten. ***SKomp.1*** ist bei Raumtemperatur fest.

***SKomp.2:*** 1188 g Dynacoll® 7381 und 111.11 g Diisodecylphtalat (Palatinol® Z) wurden während 1 Stunde bei 120 °C im Vakuum gerührt, um vorhandenes Wasser zu entfernen. Die Mischung wurde dann auf 90°C abgekühlt und das Vakuum wurde mit Stickstoff gebrochen. Unter Stickstoffatmosphäre wurden 129.25 g Isophorondiisocyanat (Vestanat® IPDI, Evonik Degussa GmbH), und 0.99 g Di-n-butyl-zinndilaurat (Metatin® K 712) eingemischt und bei 90 °C weitergerührt, bis ein konstanter Gehalt an freien Isocyanatgruppen von 1.35 Gew.-% titrimetrisch nachgewiesen werden konnte. Anschliessend wurden 164.83 g N-(3-Trimethoxysilyl-propyl)-amino-berstein-säure-diethylester zugegeben und weiter gerührt, bis keine freien Isocyanatgruppen mehr titrimetrisch nachgewiesen werden konnten.

N-(3-Trimethoxysilyl-propyl)-amino-bernsteinsäure-diethylester wurde wie folgt hergestellt: 90.33 g 3-Aminopropyl-trimethoxysilan (Silquest®A-1110, Momentive Performance Materials Inc., USA) wurden vorgelegt. Unter gutem Rühren wurden bei Raumtemperatur langsam 86.75 g Maleinsäure-diethylester (Fluka Chemie GmbH, Schweiz) zugegeben und die Mischung während 2 Stunden bei Raumtemperatur gerührt. ***SKomp.2*** ist bei Raumtemperatur fest.

### Herstellung des silanfunktionellen Polvurethanpolymers SH

Unter Stickstoffatmosphäre wurden 1000 g Polyol Acclaim® 12200 (Bayer MaterialScience AG, Deutschland; low monol Polyoxypropylendiol; OH-Zahl 11.0 mg KOH/g; Wassergehalt ca. 0.02 Gew.-%), 46.17g Isophorondiisocyanat (Vestanat® IPDI), 261.72 g Diisodecylphtalat (Palatinol® Z) und 0.14 g Di-n-butyl-zinndilaurat (Metatin® K 712) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.70 Gew.-% erreicht. Anschliessend wurden 69.88 g N-(3-Trimethoxysilyl-propyl)-amino-bernsteinsäure-diethylester beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23 °C) abgekühlt und unter Ausschluss von Feuchtigkeit aufbewahrt (theoretischer Polymergehalt = 90%). ***SH*** ist bei Raumtemperatur flüssig.

### Herstellung der Klebstoffe

In einem Vakuummischer wurden entsprechend der in Tabelle 1 angegebenen Gewichtsanteile ein silanfunktionelles Polymer, welches bei Raumtemperatur flüssig ist, Diisodecylphtalat (Palatinol® Z) und Vinyltrimethoxysilan (Silquest®A-171 von Momentive Performance Materials Inc., USA) während 5 Minuten gut vermischt. Anschliessend wurden getrocknete, gefällte Kreide (Socal® U1S2, Solvay SA, Belgien) und getrockneter Russ (Monarch® 570 von Cabot Corp., USA) sowie die Schmelzkomponente **(*SKomp.1, SKomp.2,*** PEG 2000, Dyn 7381), welche zuvor während 2 Tagen in einem Ofen bei 70 °C aufgeschmolzen wurde, während 15 Minuten bei 60 °C mitgeknetet. Bei ausgeschalteter Heizung wurden anschliessend N-(2-Aminoethyl)-(3-aminopropyl)trimethoxysilan (Silquest® A-1120 von Momentive Performance Materials Inc.) und Katalysator (Metatin® K740 bzw. Metatin® K712 als 10 %-ige Lösung in DIDP) unter Vakuum während 10 Minuten zu einer homogenen Paste verarbeitet. Diese wurde dann in innenlackierte Aluminium-Spreizkolbenkartuschen abgefüllt.

**Tabelle 1 Zusammensetzungen der erfindungsgemässen Klebstoffe 1 - 5 und der Referenzbeispiele Ref1 - Ref7 in Gew.-%;**

| | ***1*** | ***2*** | ***Ref1*** | ***Ref2*** | ***Ref3*** | ***3*** | ***4*** | ***Ref4*** | ***Ref5*** | ***Ref6*** | ***5*** | ***Ref7*** |
|---|---|---|---|---|---|---|---|---|---|---|---|---|
| ***SH*** | 50 | 50 | 50 | 50 | 50 | | | | | | | |
| S303H ^{a)} | | | | | | 50 | 50 | 50 | 50 | 50 | | |
| STP-E30 ^{c)} | | | | | | | | | | | 50 | 50 |
| Palatinol® Z | 5.5 | 5.5 | 5.5 | 5.5 | 9.5 | 6.8 | 6.8 | 6.8 | 6.8 | 10.8 | 8.95 | 8.95 |
| Silquest® A-171 | 1 | 1 | 1 | 1 | 1 | 1 | 1 | 1 | 1 | 1 | 1 | 1 |
| Socal® U1S2 | 20 | 20 | 20 | 20 | 20 | 20 | 20 | 20 | 20 | 20 | 18 | 18 |
| Monarch® 570 | 17 | 17 | 17 | 17 | 17 | 17 | 17 | 17 | 17 | 17 | 17 | 17 |
| ***SKomp.1*** | 4 | | | | | 4 | | | | | 4 | |
| ***SKomp.2*** | | 4 | | | | | 4 | | | | | |
| PEG 2000 ^{d)} | | | 4 | | | | | 4 | | | | |
| Dyn 7381 ^{e)} | | | | 4 | | | | | 4 | | | 4 |
| Silquest® A-1120 | 1 | 1 | 1 | 1 | 1 | 1 | 1 | 1 | 1 | 1 | 1 | 1 |
| Metatin® K740 | | | | | | 0.2 | 0.2 | 0.2 | 0.2 | 0.2 | | |
| Metatin® K712 ^{f)} | 1.5 | 1.5 | 1.5 | 1.5 | 1.5 | | | | | | 0.05 | 0.05 |

| | | | | | | | | | | | | |
|---|---|---|---|---|---|---|---|---|---|---|---|---|
| ^{a)} S303H: MS Polymer S303H, Kaneka Corp., Japan; ^{b)} 3200HM: SPUR⁺ 3200HM, Momentive Performance Materials Inc., USA; ^{c)} STP-E30: Geniosil® STP-E30, Wacker Chemie AG, Deutschland; ^{d)} PEG 2000: Polyethylenglykol 2000, Fluka Chemie GmbH, Schweiz; ^{e)} Dyn 7381: Dynacoll® 7381, Evonik Degussa GmbH, Deutschland; ^{f)} 10 %-ige Lösung in DIDP. | | | | | | | | | | | | |

**Tabelle 2 Resultate der Zusammensetzungen aus Tabelle 1; Referenzbeispiele Ref3 und Ref6 enthalten keine Schmelzkomponente; Die Abrutschdistanz (slip down) von Ref7 konnte nicht bestimmt werden, da die hohe Viskosität von Ref7 die Applikation mit der Kartusche verunmöglichte.**

| | ***1*** | ***2*** | ***Ref1*** | ***Ref2*** | ***Ref3*** | ***3*** | ***4*** | ***Ref4*** | ***Ref5*** | ***Ref6*** | ***5*** | ***Ref7*** |
|---|---|---|---|---|---|---|---|---|---|---|---|---|
| Zugfestigkeit [MPa] | 5.6 | 5.7 | 4.1 | 4.0 | 6.1 | 4.7 | 4.8 | 3.7 | 4.2 | 5.4 | 5.4 | 4.2 |
| E-Modul 0-5 % [MPa] | 14.7 | 13.7 | 12.1 | 14.0 | 6.3 | 6.6 | 7.4 | 7.2 | 6.8 | 3.5 | 12.9 | 14.1 |
| Bruchdehnung [%] | 240 | 252 | 189 | 168 | 300 | 269 | 275 | 229 | 251 | 291 | 279 | 214 |
| Shore A | 71 | 71 | 67 | 70 | 59 | 58 | 61 | 58 | 58 | 51 | 70 | 71 |
| slip down [mm] | 0 | 0 | 0 | 0 | 3.3 | 0 | 0 | 1.2 | 1.1 | 3.3 | 0 | k.A. |

**Tabelle 3 Klebstoffzusammensetzungen in Gew.-% mit unterschiedlichem Anteil an Schmelzkomponente und Resultate.**

| | ***1A*** | ***1B*** | ***1C*** | ***1D*** |
|---|---|---|---|---|
| ***SH*** | 50 | 50 | 50 | 47.5 |
| Palatinol® Z | 9 | 5.5 | 3.5 | 0 |
| Silquest® A-171 | 1 | 1 | 1 | 1 |
| Socal® U1S2 | 20 | 20 | 20 | 20 |
| Monarch® 570 | 17 | 17 | 17 | 17 |
| ***SKomp.1*** | 0.5 | 4.0 | 6.0 | 12.0 |
| Silquest® A-1120 | 1 | 1 | 1 | 1 |
| Metatin® K712 | 1.5 | 1.5 | 1.5 | 1.5 |
| Zugfestigkeit [MPa] | 5.38 | 5.27 | 5.39 | 5.63 |
| Bruchdehnung [%] | 250 | 224 | 212 | 166 |
| slip down [mm] | 1 | 0 | 0 | 0 |
| Schubmodul [MPa] | 1.99 | 3.92 | 6.12 | 10.56 |

## Patentansprüche

1. Zusammensetzung umfassend
i) mindestens ein feuchtigkeitsreaktives silanfunktionelles Polymer, welches bei Raumtemperatur flüssig ist, wobei das silanfunktionelle Polymer:
- ein silanfunktionelles Polyurethanpolymer **STP1** ist, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist und erhältlich ist durch die Umsetzung aus mindestens einem Polyisocyanat mit mindestens einem Polyoxyalkylenpolyol, oder
- ein silanfunktionelles Polyurethanpolymer **STP2** ist, erhältlich durch die Umsetzung eines Isocyanatosilans **IS** der Formel (II) 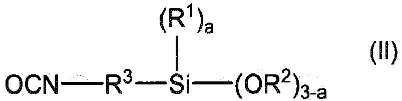 mit einem Polymer, welches Hydroxylgruppen, Mercaptogruppen und/oder Aminogruppen aufweist, wobei ein Hydroxylgruppen aufweisendes Polymer
- ein hochmolekulares Polyoxyalkylenpolyol mit einem Ungesättigtheitsgrad tiefer als 0.02 mEq/g und mit einem Molekulargewicht im Bereich von 4000 bis 30'000 g/mol ist, oder
- ein Hydroxylgruppen aufweisendes Polyurethanpolymer erhältlich durch die Umsetzung von mindestens einem Polyisocyanat mit mindestens einem Polyoxyalkylenpolyol,
oder
- ein silanfunktionelles Polymer **STP3** ist, welches erhältlich ist durch eine Hydrosilylierungsreaktion von Polymeren mit endständigen Doppelbindungen und diese Polymere Polyoxyalkylenpolyole sind; sowie
ii) mindestens einen silanfunktionellen Polyester der Formel (I) 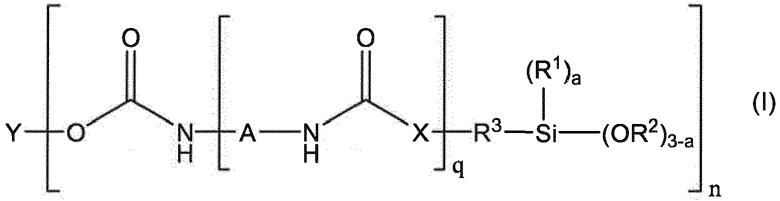 wobei
Y für einen n-wertigen Rest eines, bei Raumtemperatur festen, Hydroxylgruppen terminierten Polyesters **P** nach Entfernung von n Hydroxylgruppen steht;
R¹ für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
R² für einen Acylrest oder für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
R³ für einen linearen oder verzweigten, zweiwertigen Kohlenwasserstoffrest mit 1 bis 12 C-Atomen steht, welcher gegebenenfalls cyclische und/oder aromatischen Anteile, und gegebenenfalls ein oder mehrere Heteroatome aufweist;
der Index a für einen Wert von 0, 1 oder 2 steht;
der Index n für einen Wert von 1 bis 3 steht;
A für einen zweiwertigen Rest eines Diisocyanats nach Entfernung der beiden Isocyanatgruppen steht;
der Index q für einen Wert von 0 oder 1 steht; und
X für S oder für NR⁵ steht
wobei
R⁵ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (VI) stehen, 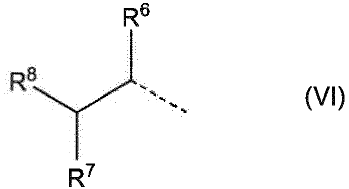
R⁶ und R⁷ unabhängig voneinander für ein Wasserstoffatom oder für einen Rest aus der Gruppe bestehend aus -R¹¹, -COOR¹¹ und -CN steht; und
R⁸ für ein Wasserstoffatom oder für einen Rest aus der Gruppe bestehend aus -CH₂-COOR¹¹, -COOR¹¹, CONHR¹¹, -CON(R¹¹)₂, -CN, -NO₂, -PO(OR¹¹)₂, -SO₂R¹¹ und -SO₂OR¹¹ steht, und
R¹¹ für einen Kohlenwasserstoffrest mit 1 bis 20 C-Atomen steht, welcher gegebenenfalls ein oder mehrere Heteroatome aufweist.

2. Zusammensetzung gemäss Anspruch 1, **dadurch gekennzeichnet, dass** der Polyester **P** ein kristalliner Polyester ist.

3. Zusammensetzung gemäss einem der vorhergehenden Ansprüche, **dadurch gekennzeichnet, dass** der Polyester **P** ein mittleres Molekulargewicht Mₙ von 2000 g/mol bis 7000 g/mol aufweist.

4. Zusammensetzung gemäss einem der vorhergehenden Ansprüche, **dadurch gekennzeichnet, dass** q für einen Wert von 0 steht.

5. Zusammensetzung gemäss einem der vorhergehenden Ansprüche, **dadurch gekennzeichnet, dass** a für einen Wert von 0 oder 1 steht.

6. Zusammensetzung gemäss einem der vorhergehenden Ansprüche, **dadurch gekennzeichnet, dass** n für einen Wert von 2 steht.

7. Zusammensetzung gemäss einem der vorhergehenden Ansprüche, **dadurch gekennzeichnet, dass** R² für eine Acyl- oder Alkylgruppe mit 1 bis 5 C-Atomen steht.

8. Zusammensetzung gemäss einem der vorhergehenden Ansprüche, **dadurch gekennzeichnet, dass** R³ für einen Alkylenrest mit 1 bis 3 C-Atomen steht.

9. Zusammensetzung gemäss Anspruch 2, **dadurch gekennzeichnet, dass** der Kristallisationspunkt des Polyesters **P** weniger als 30° C unterhalb des Schmelzpunktes des Polyesters **P** liegt.

10. Zusammensetzung gemäss einem der vorhergehenden Ansprüche, **dadurch gekennzeichnet, dass** das feuchtigkeitsreaktive silanfunktionelle Polymer, welches bei Raumtemperatur flüssig ist, ein silanterminiertes Polyurethanpolymer ist.

11. Zusammensetzung gemäss einem der vorhergehenden Ansprüche, **dadurch gekennzeichnet, dass** der Anteil an silanfunktionellem Polyester der Formel (I) 0.5 bis 10 Gew.-% der gesamten Zusammensetzung beträgt.

12. Verwendung einer Zusammensetzung gemäss einem der Ansprüche 1 bis 11 als feuchtigkeitshärtender Klebstoff, Dichtstoff oder Beschichtung.

13. Verwendung gemäss Anspruch 12 als feuchtigkeitshärtender Klebstoff für die Fahrzeugverglasung.

14. Verwendung gemäss einem der Ansprüche 12 oder 13 als feuchtigkeitshärtender Warm- oder Heissschmelzklebstoff.

15. Zweikomponentige Zusammensetzung bestehend aus
einer Komponente **A** umfassend eine Zusammensetzung gemäss einem der Ansprüche 1 bis 11; und
einer Komponente **B** umfassend Wasser.

## Claims

1. Composition comprising
i) at least one moisture-reactive silane-functional polymer which is liquid at room temperature, where the silane-functional polymer:
- is a silane-functional polyurethane polymer **STP1** obtainable by the reaction of a silane having at least one group reactive toward isocyanate groups with a polyurethane polymer which has isocyanate groups and is obtainable by the reaction from at least one polyisocyanate with at least one polyoxyalkylene polyol,
or
- a silane-functional polyurethane polymer **STP2** obtainable by the reaction of an isocyanatosilane **IS** of the formula (II) 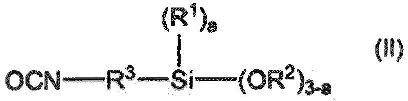 with a polymer having hydroxyl groups, mercapto groups and/or amino groups, where a polymer having hydroxyl groups
- is a high molecular weight polyoxyalkylene polyol having a degree of unsaturation of less than 0.02 meq/g and having a molecular weight in the range from 4000 to 30 000 g/mol, or
- a polyurethane polymer having hydroxyl groups, obtainable by the reaction of at least one polyisocyanate with at least one polyoxyalkylene polyol,
or
- a silane-functional polymer **STP3** obtainable by a hydrosilylation reaction of polymers having terminal double bonds and these polymers are polyoxyalkylene polyols; and
ii) at least one silane-functional polyester of the formula (I) 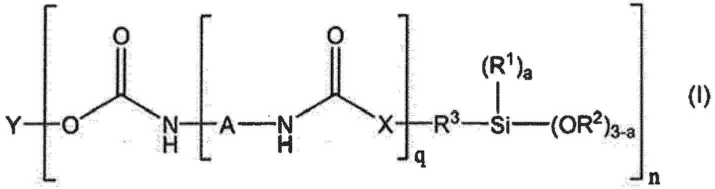 where
Y is an n-valent radical of a polyester P terminated by hydroxyl groups which is solid at room temperature after removal of n hydroxyl groups;
R¹ is a linear or branched, monovalent hydrocarbyl radical which has 1 to 12 carbon atoms and optionally has one or more C-C multiple bonds and/or optionally cycloaliphatic and/or aromatic components;
R² is an acyl radical or a linear or branched, monovalent hydrocarbyl radical which has 1 to 12 carbon atoms and optionally has one or more C-C multiple bonds and/or optionally cycloaliphatic and/or aromatic components;
R³ is a linear or branched, divalent hydrocarbyl radical which has 1 to 12 carbon atoms and optionally has cyclic and/or aromatic components, and optionally one or more heteroatoms;
the index a has a value of 0, 1 or 2;
the index n has a value of 1 to 3;
A is a divalent radical of a diisocyanate after removal of the two isocyanate groups;
the index q has a value of 0 or 1; and
X is S or NR⁵
where
R⁵ is a hydrogen atom or a linear or branched, monovalent hydrocarbyl radical which has 1 to 20 carbon atoms and optionally has cyclic components, or is a radical of the formula (VI) 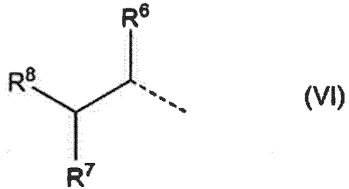
R⁶ and R⁷ are independently a hydrogen atom or a radical from the group consisting of -R¹¹, -COOR¹¹ and -CN; and
R⁸ is a hydrogen atom or a radical from the group consisting of -CH₂-COOR¹¹, -COOR¹¹, CONHR¹¹, -CON(R¹¹)₂, -CN, -NO₂, -PO (OR¹¹)₂, -SO₂R¹¹ and -SO₂OR¹¹, and
R¹¹ is a hydrocarbyl radical which has 1 to 20 carbon atoms and optionally has one or more heteroatoms.

2. Composition according to Claim 1, **characterized in that** the polyester **P** is a crystalline polyester.

3. Composition according to either of the preceding claims, **characterized in that** the polyester **P** has an average molecular weight Mₙ of 2000 g/mol to 7000 g/mol.

4. Composition according to any of the preceding claims, **characterized in that** q has a value of 0.

5. Composition according to any of the preceding claims, **characterized in that** a has a value of 0 or 1.

6. Composition according to any of the preceding claims, **characterized in that** n has a value of 2.

7. Composition according to any of the preceding claims, **characterized in that** R² is an acyl or alkyl group having 1 to 5 carbon atoms.

8. Composition according to any of the preceding claims, **characterized in that** R³ is an alkylene radical having 1 to 3 carbon atoms.

9. Composition according to Claim 2, **characterized in that** the crystallization point of the polyester **P** is less than 30°C below the melting point of the polyester **P.**

10. Composition according to any of the preceding claims, **characterized in that** the moisture-reactive silane-functional polymer which is liquid at room temperature is a silane-terminated polyurethane polymer.

11. Composition according to any of the preceding claims, **characterized in that** the proportion of silane-functional polyester of the formula (I) is 0.5% to 10% by weight of the overall composition.

12. Use of a composition according to any of Claims 1 to 11 as moisture-curing adhesive, sealant or coating.

13. Use according to Claim 12 as moisture-curing adhesive for vehicle glazing.

14. Use according to either of Claims 12 and 13 as moisture-curing warm- or hotmelt adhesive.

15. Two-component composition consisting of
a component **A** comprising a composition according to any of Claims 1 to 11; and
a component **B** comprising water.

## Revendications

1. Composition comprenant :
i) au moins un polymère à fonction silane réactif avec l'humidité, qui est liquide à température ambiante, le polymère à fonction silane :
- étant un polymère de polyuréthane à fonction silane **STP1,** qui peut être obtenu par la mise en réaction d'un silane, qui comprend au moins un groupe réactif avec les groupes isocyanate, avec un polymère de polyuréthane, qui comprend des groupes isocyanate et qui peut être obtenu par la mise en réaction d'au moins un polyisocyanate avec au moins un polyoxyalkylène-polyol, ou
- étant un polymère de polyuréthane à fonction silane **STP2,** pouvant être obtenu par la mise en réaction d'un isocyanatosilane **IS** de formule (II) 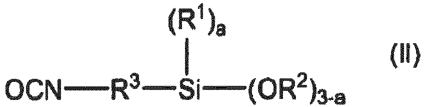 avec un polymère, qui comprend des groupes hydroxyle, des groupes mercapto et/ou des groupes amino, un polymère comprenant des groupes hydroxyle
- étant un polyoxyalkylène-polyol de poids moléculaire élevé ayant un degré d'insaturation inférieur à 0,02 méq./g et ayant un poids moléculaire dans la plage allant de 4 000 à 30 000 g/mol, ou
- un polymère de polyuréthane comprenant des groupes hydroxyle pouvant être obtenu par la mise en réaction d'au moins un polyisocyanate avec au moins un polyoxyalkylène-polyol,
ou
- étant un polymère à fonction silane **STP3,** qui peut être obtenu par une réaction d'hydrosilylation de polymères contenant des doubles liaisons terminales, ces polymères étant des polyoxyalkylène-polyols ; ainsi que
ii) au moins un polyester à fonction silane de formule (I) 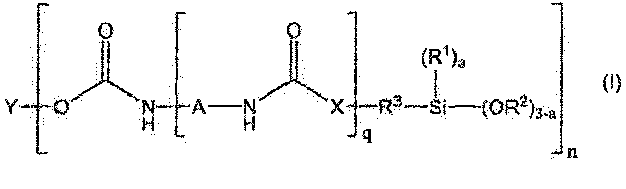 dans laquelle
Y représente un radical n-valent d'un polyester **P** terminé par des groupes hydroxyle, solide à température ambiante, après l'élimination de n groupes hydroxyle ;
R¹ représente un radical hydrocarboné monovalent linéaire ou ramifié, de 1 à 12 atomes C, qui comprend éventuellement une ou plusieurs liaisons multiples C-C et/ou éventuellement des fractions cycloaliphatiques et/ou aromatiques ;
R² représente un radical acyle ou un radical hydrocarboné monovalent linéaire ou ramifié, de 1 à 12 atomes C, qui comprend éventuellement une ou plusieurs liaisons multiples C-C et/ou éventuellement des fractions cycloaliphatiques et/ou aromatiques ;
R³ représente un radical hydrocarboné bivalent linéaire ou ramifié, de 1 à 12 atomes C, qui comprend éventuellement des fractions cycliques et/ou aromatiques, et éventuellement un ou plusieurs hétéroatomes ;
l'indice a représente une valeur de 0, 1 ou 2 ; l'indice n représente une valeur de 1 à 3 ;
A représente un radical bivalent d'un diisocyanate après l'élimination des deux groupes isocyanate ;
l'indice q représente une valeur de 0 ou 1 ; et
X représente S ou NR⁵,
R⁵ représentant un atome d'hydrogène ou un radical hydrocarboné monovalent linéaire ou ramifié, de 1 à 20 atomes C, qui comprend éventuellement des fractions cycliques, ou un radical de formule (VI) 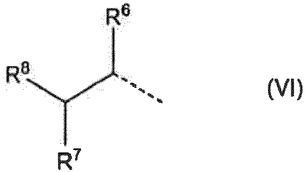
R⁶ et R⁷ représentant indépendamment l'un de l'autre un atome d'hydrogène ou un radical du groupe constitué par -R¹¹, -COOR¹¹ et -CN; et
R⁸ représentant un atome d'hydrogène ou un radical du groupe constitué par -CH₂-COOR¹¹, -COOR¹¹, CONHR¹¹, -CON(R¹¹)₂, -CN, -NO₂, -PO(OR¹¹)₂, -SO₂R¹¹ et -SO₂OR¹¹, et
R¹¹ représentant un radical hydrocarboné de 1 à 20 atomes C, qui comprend éventuellement un ou plusieurs hétéroatomes.

2. Composition selon la revendication 1, **caractérisée en ce que** le polyester **P** est un polyester cristallin.

3. Composition selon l'une quelconque des revendications précédentes, **caractérisée en ce que** le polyester **P** présente un poids moléculaire moyen Mₙ de 2 000 g/mol à 7 000 g/mol.

4. Composition selon l'une quelconque des revendications précédentes, **caractérisée en ce que** q représente une valeur de 0.

5. Composition selon l'une quelconque des revendications précédentes, **caractérisée en ce qu'**a représente une valeur de 0 ou 1.

6. Composition selon l'une quelconque des revendications précédentes, **caractérisée en ce que** n représente une valeur de 2.

7. Composition selon l'une quelconque des revendications précédentes, **caractérisée en ce que** R² représente un groupe acyle ou alkyle de 1 à 5 atomes C.

8. Composition selon l'une quelconque des revendications précédentes, **caractérisée en ce que** R³ représente un radical alkylène de 1 à 3 atomes C.

9. Composition selon la revendication 2, **caractérisée en ce que** le point de cristallisation du polyester **P** se situe moins de 30 °C en dessous du point de fusion du polyester **P.**

10. Composition selon l'une quelconque des revendications précédentes, **caractérisée en ce que** le polymère à fonction silane réactif à l'humidité, qui est liquide à température ambiante, est un polymère de polyuréthane à terminaison silane.

11. Composition selon l'une quelconque des revendications précédentes, **caractérisée en ce que** la proportion de polyester à fonction silane de formule (I) est de 0,5 à 10 % en poids de la composition totale.

12. Utilisation d'une composition selon l'une quelconque des revendications 1 à 11 en tant qu'adhésif, agent d'étanchéité ou revêtement durcissant à l'humidité.

13. Utilisation selon la revendication 12 en tant qu'adhésif durcissant à l'humidité pour le vitrage de véhicules.

14. Utilisation selon l'une quelconque des revendications 12 ou 13 en tant qu'adhésif thermofusible basse ou haute température durcissant à l'humidité.

15. Composition bicomposante, constituée par :
un composant **A** comprenant une composition selon l'une quelconque des revendications 1 à 11 ; et
un composant **B** comprenant de l'eau.
